## Europäisches Patentamt
## European Patent Office
## Office européen des brevets

(19)

(11) Numéro de publication : **0 025 121**
**B1**

# (12) FASCICULE DE BREVET EUROPÉEN

(45) Date de publication du fascicule du brevet :
20.04.83

(51) Int. Cl.³ : **B 29 D 23/12, F 16 L 9/16**

(21) Numéro de dépôt : **80104675.6**

(22) Date de dépôt : **08.08.80**

(54) **Tube en matière plastique obtenu par enroulement en hélice d'un profilé.**

(30) Priorité : 10.09.79 FR 7922550

(43) Date de publication de la demande :
18.03.81 Bulletin 81/11

(45) Mention de la délivrance du brevet :
20.04.83 Bulletin 83/16

(84) Etats contractants désignés :
**BE CH DE GB IT LI LU NL SE**

(56) Documents cités :
**BE A 565 101**
**FR A 1 337 887**
**FR A 1 446 819**
**FR A 2 005 613**
**FR A 2 023 272**
**US A 2 516 864**

(73) Titulaire : **PONT-A-MOUSSON S.A.**
**91, Avenue de la Libération**
**F-54017 Nancy (FR)**

(72) Inventeur : **Langenfeld, Michel**
**6 rue Louis Guingot**
**F-54690 Lay Saint Christophe (FR)**
Inventeur : **Lagabe, André**
**rue de la Haute Cour**
**F-54570 Foug (FR)**

(74) Mandataire : **Weil, Roger et al**
**c/o Centre de Recherches de Pont-à-Mousson BP 28**
**F-54700 Pont-à-Mousson (FR)**

Jouve, 18, rue St-Denis, 75001 Paris, France

Tube en matière plastique obtenu par enroulement en hélice d'un profilé

La présente invention est relative aux tubes en matière plastique obtenus par enroulement en hélice d'un profilé constitué d'un corps à section rectangulaire muni sur chaque bord d'un relief d'agrafage, l'un mâle et l'autre femelle. Ces tubes, rigides et légers, peuvent avoir un diamètre nettement supérieur aux diamètres maximaux que l'on peut extruder directement sous forme de tubes.

On connaît par le brevet FR-A-1 446 819 un profilé rectangulaire alvéolé en matière plastique thermoplastique obtenu par extrusion dont les deux bords constituent des agrafes complémentaires, l'une mâle, l'autre femelle à boucle ou emboîtement pour loger l'agrafe mâle. Cette complémentarité des agrafes est si rigoureuse et si parfaite qu'aucun dégagement n'est ménagé de part et d'autre des agrafes, entre deux sections rectangulaires adjacentes après enroulement en hélice, pour permettre un libre et parfait agrafage. Il en résulte que l'agrafage peut être difficile à réaliser et même éventuellement défectueux.

L'invention pose donc et résout le problème du parfait agrafage ou verrouillage des spires adjacentes d'enroulement d'un profilé plastique de ce genre en assurant un dégagement suffisant de part et d'autre des agrafes ainsi qu'un remplissage ultérieur de ce dégagement pour obtenir après enroulement et agrafage une paroi continue et lisse.

L'invention a donc pour but de fournir un tube de ce type qui présente à la fois une surface intérieure et une surface extérieure lisses, qui puisse facilement être fabriqué par enroulement continu et dont les spires soient fermement solidarisées les unes avec les autres par un parfait agrafage.

A cet effet, l'invention a pour objet un tube du type précité caractérisé en ce que chaque relief comporte un voile axial de support qui prolonge l'un des grands côtés de la section rectangulaire du corps du profilé, les deux voiles adjacents étant en butée et les deux reliefs en prise définissant avec les bords adjacents du corps du profilé après son enroulement en hélice un espace à section en U occupé par un cordon de section complémentaire.

L'invention s'applique essentiellement au cas où le profilé et le cordon sont en une matière thermoplastique, les reliefs étant soudés l'un à l'autre et le cordon étant soudé à ces reliefs et aux bords adjacents du corps du profilé. Une structure alvéolaire conférée au corps du profilé permet d'augmenter la rigidité du tube.

D'autres caractéristiques et avantages de l'invention ressortiront de la description qui va suivre, donnée à titre d'exemple non limitatif et en regard du dessin annexé, sur lequel :

la Figure 1 est une vue partielle en coupe axiale d'un tube suivant l'invention en cours de fabrication ;

la Figure 2 est une vue analogue du tube terminé ;

la Figure 3 est une vue analogue d'une variante du tube de la Fig. 2.

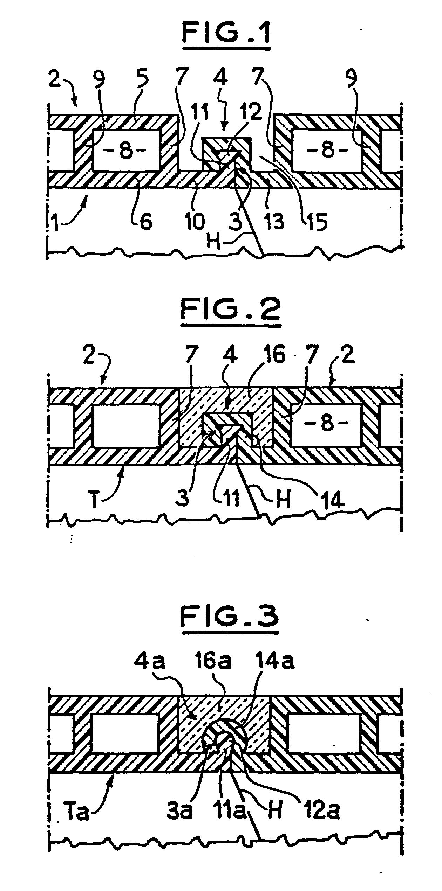

La Fig. 1 illustre l'enroulement en hélice H d'un profilé 1 extrudé en matière plastique thermoplastique, par exemple en chlorure de polyvinyle rigide ou PVC. Le profilé 1 est constitué d'un corps 2 bordé de chaque côté d'un relief d'agrafage 3, 4.

Le corps 2 a une section rectangulaire à grands côtés axiaux extérieur 5 et intérieur 6 et à petits côtés radiaux 7, axiaux et radiaux s'entendant par rapport au tube final. Ce corps 2 est alvéolé ou en caisson, c'est-à-dire qu'il comporte plusieurs cavités longitudinales 8 séparées par des cloisons 9 à section radiale. Le corps 2 peut par exemple comporter quatre cavités 8 à section rectangulaire, les cloisons 9 et les côtés du corps ayant une épaisseur commune.

Le relief 3 est un relief mâle. Il comporte une section en L constituée d'une branche ou voile axial 10 et d'une branche radiale 11. La première branche prolonge le grand côté du corps 2 constituant après enroulement en hélice la surface intérieure du tube, avec la même épaisseur, tandis que la seconde s'étend radialement vers l'extérieur sur environ la moitié de la hauteur d'un petit côté 7 pour se terminer en une queue d'aronde 12.

Le relief 4 est un relief femelle et est constitué, en section, d'une partie ou voile 13 de liaison avec le corps 2 qui est analogue à la branche 10, situé dans le prolongement de cette branche et en butée sur elle dans la position agrafée représentée. De l'extrémité de cette partie 13 part vers l'extérieur un crochet en U 14 qui tourne radialement vers l'intérieur sa cavité en queue d'aronde et qui est adapté pour envelopper exactement la branche 11 du relief 3 jusqu'à venir pratiquement au contact de la branche 10.

Dans la position agrafée, la hauteur de l'ensemble des deux reliefs est nettement inférieure à celle du corps 2, et sa largeur est nettement inférieure à la distance axiale séparant les petits côtés 7 en regard. Ainsi est défini entre ces derniers et autour du crochet 14 un espace libre 15 en U.

Pour terminer le tube T (Fig. 2), on dispose dans l'espace 15 un cordon 16 en matière plastique thermoplastique rigide, telle que le PVC, de section en U complémentaire. Ce cordon vient donc coiffer l'ensemble des deux reliefs 3, 4, et sa surface extérieure affleure celle des deux parties adjacentes du corps 2 du profilé.

Le tube T résultant est ainsi lisse aussi bien extérieurement qu'intérieurement, donc peu sensible à des accrochages ou à des déchirures lors de manutentions ; en outre, la surface extérieure du tube peut rester constamment propre du fait qu'elle est lisse, notamment lorsque ce tube est posé sur un sol de terre et/ou de gravier, et le tube se prête à des assemblages au moyen des raccords et garnitures d'étanchéité classiques.

L'avantage esthétique n'est pas non plus négligeable.

De plus, les spires ne risquent pas de se séparer les unes des autres grâce d'une part à l'agrafage positif 12-14 et d'autre part au verrouillage de cet agrafage assuré par le cordon 16.

L'enroulement du profilé 1 ainsi que la mise en place du cordon 16 s'effectuent de préférence à une température suffisante pour assurer, en plus de leur solidarisation mécanique, une solidarisation étanche par thermosoudage des éléments 3, 4 et 16. En variante, on peut utiliser une colle dans le même but.

L'enroulement en hélice du profilé 1 à spires jointives, peut être effectué sur un mandrin avec emploi de galets presseurs appliqués sur les agrafes 3 et 4 et sur le cordon 16 enroulé à son tour.

Le tube Tᵃ de la Fig. 3 ne diffère de celui de la Fig. 2 que par la forme des reliefs 3ᵃ et 4ᵃ : la branche radiale 11ᵃ du relief mâle 3ᵃ se termine par un bourrelet 12ᵃ en trois quarts de cercle, et le crochet 14ᵃ du relief femelle 4ᵃ est arrondi de façon conjuguée. La concavité du cordon 16ᵃ est arrondie de façon correspondante.

## Revendications

1. Tube (T, Ta) en matière plastique obtenu par enroulement en hélice (H) d'un profilé (1) constitué d'un corps (2) à section rectangulaire muni sur chaque bord d'un relief d'agrafage, l'un mâle (3, 3a) et l'autre femelle (4, 4a) caractérisé en ce que chaque relief (3, 4, 3a, 4a) comporte un voile axial de support (10, 13) qui prolonge l'un des grands côtés (6) de la section rectangulaire du corps (2) du profilé (1), les deux voiles adjacents (10, 13) étant en butée et les deux reliefs (3, 4, 3a, 4a) en prise définissant avec les bords adjacents (7) du corps du profilé (1) après son enroulement en hélice (H) un espace (15) à section en U occupé par un cordon (16, 16a) de section complémentaire.

2. Tube suivant la revendication 1, caractérisé en ce que le cordon (16, 16a) est également en matière plastique.

3. Tube suivant la revendication 2, caractérisé en ce que le profilé (1) et le cordon (16, 16a) sont en une matière thermoplastique, les reliefs (3, 4, 3a, 4a) étant soudés l'un à l'autre et le cordon étant soudé à ces reliefs et aux bords adjacents (7) du corps (2) du profilé (1).

4. Tube suivant l'une quelconque des revendications 1 à 3, caractérisé en ce que le corps (2) du profilé (1) est alvéolaire.

5. Tube suivant l'une quelconque des revendications 1 à 4, caractérisé en ce que les voiles axiaux (10, 13) prolongent la surface (6) du corps (2) du profilé (1) constituant après son enroulement la surface intérieure du tube.

6. Tube suivant l'une quelconque des revendications 1 à 5, caractérisé en ce que les reliefs (3, 4) présentent une partie d'agrafage (12, 14) en queue d'aronde.

7. Tube suivant l'une quelconque des revendications 1 à 5, caractérisé en ce que les reliefs (3a, 4a) présentent une partie d'agrafage (12a, 14a) en trois-quarts de cercle.

## Claims

1. Tube (T, Ta) of plastics material obtained by winding in a helix (H) a sectional member (1) constituted by a body (2) of rectangular section provided on each edge with a clipping relief, one being male (3, 3a) and the other female (4, 4a), characterised in that each relief (3, 4, 3a, 4a) comprises an axial support web (10, 13) which extends one of the major sides (6) of the rectangular section of the body (2) of the sectional member (1), the two adjacent webs (10, 13) being in abutment and the two reliefs (3, 4, 3a, 4a) in engagement defining with the adjacent edges (7) of the body of the sectional member (1) after it is wound in a helix (H) a space (15) of U-shaped section occupied by a bead (16, 16a) of complementary section.

2. Tube according to claim 1, characterised in that the bead (16, 16a) also consists of plastics material.

3. Tube according to claim 2, characterised in that the sectional member (1) and the bead (16, 16a) consist of thermoplastic material, the reliefs (3, 4, 3a, 4a) being welded one to the other and the bead being welded to these reliefs and to the adjacent edges (7) of the body (2) of the sectional member (1).

4. Tube according to one of claims 1 to 3, characterised in that the body (2) of the sectional member (1) is cellular.

5. Tube according to one of claims 1 to 4, characterised in that the axial webs (10, 13) extend the surface (6) of the body (2) of the sectional member (1) constituting the inner surface of the tube after winding.

6. Tube according to one of claims 1 to 5, characterised in that the reliefs (3, 4) comprise a dove-tailed clipping part (12, 14).

7. Tube according to one of claims 1 to 5, characterised in that the reliefs (3a, 4a) comprise a clipping part (12a, 14a) in the shape of three-quarters of a circle.

## Ansprüche

1. Durch schraubenförmiges (H) Wickeln eines Profils (1) erhaltenes Rohr (T, Ta), wobei das Profil (1) aus einem einen rechteckigen Querschnitt aufweisenden Körper (2) besteht, der an jedem Rand mit einem Falzansatz versehen ist, von denen der eine ein Eindringender (3, 3a) und der andere ein Aufnehmender (4, 4a) ist, dadurch gekennzeichnet, daß jeder Falzansatz (3, 4, 3a, 4a) einen axialen Tragsteg (10, 13) aufweist, der die eine (6) der großen Seiten des rechteckigen Querschnitts des Körpers (2) des Profils (1) verlängert, wobei die benachbarten Stege (10, 13) aneinander stossen und die beiden in Eingriff stehenden Falzansätze (3, 4, 3a, 4a) nach ihrem schraubenförmigen (H) Wickeln mit den benachbarten Rändern (7) des Körpers des Profils (1) einen Raum (15) mit U-förmigem Querschnitt begrenzen, der von einer Schnur (16, 16a) mit komplementärem Querschnitt eingenommen wird.

2. Rohr nach Anspruch 1, dadurch gekennzeichnet, daß die Schnur (16, 16a) ebenfalls aus Kunststoff besteht.

3. Rohr nach Anspruch 2, dadurch gekennzeichnet, daß das Profil (1) und die Schnur (16, 16a) aus einem Thermoplast bestehen, wobei die Falzansätze (3, 4, 3a, 4a) aneinander geschweißt sind und die Schnur an diese Falzansätze und an die benachbarten Ränder (7) des Körpers (2) des Profils (1) geschweißt ist.

4. Rohr nach einem der Ansprüche 1 bis 3, dadurch gekennzeichnet, daß der Körper (2) des Profils (1) zellenförmig ist.

5. Rohr nach einem der Ansprüche 1 bis 4, dadurch gekennzeichnet, daß die axialen Stege (10, 13) die Fläche (6) des Körpers (2) des Profils (1) verlängern, die nach dessen Wickeln die Innenfläche des Rohrs bildet.

6. Rohr nach einem der Ansprüche 1 bis 5, dadurch gekennzeichnet, daß die Falzansätze (3, 4) einen schwalbenschwanzförmigen Falzteil (12, 14) aufweisen.

7. Rohr nach einem der Ansprüche 1 bis 5, dadurch gekennzeichnet, daß die Falzansätze (3a, 4a) auf einem Dreiviertelkreis einen Schwalbenschwanz (12a, 14a) aufweisen.

## FIG.1

## FIG.2

## FIG.3